# EUROPÄISCHE PATENTSCHRIFT

(11) **EP 2 774 738 B1**
(45) Veröffentlichungstag und Bekanntmachung des Hinweises auf die Patenterteilung: **13.09.2017**
(21) Anmeldenummer: 13184544.8
(22) Anmeldetag: 16.09.2013
(51) Int. Cl.: B29C 33/42, B29C 70/48

(54) **Verfahren zur Herstellung eines Faserverbundbauteils mit strukturierter Oberfläche und dadurch hergestelltes Faservebundbauteil**
Method for producing a fibre composite component with surface structure and component obtained thereby
Procédé de fabrication d'un composant en fibres composites avec surface structurée et composant ainsi obtenue

(30) Priorität: 04.03.2013 DE 102013203611
(43) Veröffentlichungstag der Anmeldung: 10.09.2014
(73) Patentinhaber: FRIMO Group GmbH, 49504 Lotte (DE)
(72) Erfinder: Stelzl, Karl-Heinz, 94342 Straßkirchen (DE); Bayer, Hans-Günter, 49205 Hasbergen (DE); Schwager, Dominik, 85253 Eisenhofen (DE)
(74) Vertreter: Hoffmann Eitle

(56) Entgegenhaltungen:
- WO-A1-87/01627
- WO-A1-2005/106155
- FR-A1- 2 814 183
- GB-A- 2 141 722

## Beschreibung

### Technisches Gebiet

Die vorliegende Erfindung betrifft ein Verfahren zum Herstellen eines Faserverbundbauteils, welches ein Fasermaterial umfasst, sowie ein Faserverbundbauteil. Derartige Faserverbundbauteile kommen beispielsweise bei Personentransportgefährten, insbesondere im Automobilbereich, Schienenverkehr oder im Bereich der Luftfahrt, oder auch bei Sportgeräten wie Surfbrettern zur Anwendung.

### Stand der Technik

Als Stand der Technik ist die EP 0 331 267 A1 bekannt, die ein Verfahren zum Verarbeiten von Compositematerialien betrifft. Zur Verarbeitung von Faserverbundmaterial ist das RTM-Verfahren (Resin Transfer Moulding) bekannt, das insbesondere in der Serienfertigung von Faserverbundbauteilen zur Anwendung kommt.

Gemäß EP 0 331 267 A1 wird als Fasermaterial beispielsweise Glasfaser, Carbonfaser, Aramidfaser oder Ähnliches gewählt. Ferner wird ein Harz mit einer relativ niedrigen Viskosität eingesetzt. Zusätzlich kann eine die Viskosität des Matrixmaterials reduzierende Komponente verwendet werden.

Allerdings ist es im Stand der Technik üblicherweise verbreitet, Epoxid-Harz als Matrixmaterial für derartige Faserverbundbauteile zu verwenden. Ferner sind Strukturen aus SMC (Sheet Molding Compound) oder GMT (Glass Mat Thermoplasts) bekannt. Epoxid-Harz hat jedoch unter anderem den Nachteil, dass es mit relativ hohem Druck in ein Werkzeug eingebracht werden muss. Diese hohen Drücke führen jedoch dazu, dass die Gestaltungsmöglichkeiten hinsichtlich der Oberflächenstruktur des derart gefertigten Bauteils beschränkt sind. Insbesondere ergibt sich eine unruhige Oberfläche und sogenannte "Inserts" zeichnen sich ab. Auf schrägen oder senkrecht zur Druckrichtung stehenden Flächen sind Press-Systeme nicht umsetzbar.

Es ist die DE 101 07 269 A1 bekannt, die ein Verfahren zur Herstellung eines Innenverkleidungsteils sowie ein Innenverkleidungsteil, insbesondere eines Innenverkleidungsteils in Kraftfahrzeugen, betrifft. Im Rahmen des Verfahrens wird ein Mattenmaterial, bevorzugt ein Gewebe, ein Fleece oder eine Stoffbahn, in ein Formwerkzeug eingelegt und über einen Angusskanal, der im Formwerkzeug ausgebildet oder eingearbeitet ist, wird ein flüssiger Kunststoff dem Formwerkzeug zugeführt. Der hier verwendet Kunststoff ist ausgewählt aus Polypropylen, Polyethylen oder ABS. Der im Formwerkzeug vorhandene Hohlraum, der die Gestalt eines Innenverkleidungsteils hat, wird so ausgefüllt, dass der Kunststoff das Mattenmaterial durchdringt oder benetzt, und dabei zu einer Wandung des Formwerkzeuges hin drängt, die nicht zur Bildung einer Sichtoberfläche strukturiert ist. Sobald der Kunststoff erstarrt, kann das Innenverkleidungsteil dem Formwerkzeug entnommen werden und nach einer Entfernung vorhandener Grate, z.B. des Angussgrates, kann das Innenverkleidungsteil eingebaut werden.

Ferner ist die DE 10 2008 020 727 A1 bekannt, die ein Kunststoffprodukt mit einer genarbten Oberflächenstruktur sowie ein Werkzeug zur Herstellung eines solchen betrifft. Im Rahmen dieses Verfahrens soll eine makroskopische Narbung einer Mikro- oder Nanostruktur überlagert werden. Mikrostrukturen bewegen sich dabei im Bereich von mehr als 50 µm, Nanostrukturen im Bereich von weniger als 10 µm. So kann eine Narbung mit einer Narbtiefe von 0,5 mm bis 0,05 mm erreicht werden. Das Oberflächenmaterial besteht dabei insbesondere aus einem Kunststoffmaterial, beispielsweise einem thermoplastischen oder duroplastischen Kunststoffmaterial, vorzugsweise Polyurethanmaterial. Die Oberflächenschicht kann auf einem Träger aufgebracht sein, der insbesondere aus Spritzgießteil bestehen kann.

Als weiteres Dokument ist die GB 2 141 722 A bekannt, die ein Verbundmaterial mit einer Matrix aus einem Urethanharz aufweist, das durch kontinuierliche Fasern verstärkt wird.

Ferner ist die FR 2 814 183 A1 zu nennen, die ein Herstellungsverfahren für Holzplanken betrifft.

### Gegenstand der Erfindung

Aufgabe der vorliegenden Erfindung ist es, ein Verfahren zur Herstellung eines Faserverbundbauteils bereitzustellen, mit dem ein den Eigenschaften entsprechendes, einfach herstellbares leichtes Bauteil hoher Steifigkeit mit optisch ansprechendem Äußeren hergestellt werden kann.

Der Gegenstand des Anspruchs 1 stellt ein Verfahren bereit, mit dem ein Faserverbundbauteil mit einer feinen Oberflächenstruktur hergestellt werden kann. Weitere bevorzugte Ausführungsformen des erfindungsgemäßen Verfahrens sind in den abhängigen Ansprüchen aufgeführt.

Kerngedanke der vorliegenden Erfindung ist es, ein Faserverbundbauteil mittels Fasern und einem niedrig viskosen Matrixmaterial, bevorzugt einem Duroplast, besonders bevorzugt Polyurethan, herzustellen, um die durch das Werkzeug bereitgestellte Oberfläche mit einer feinen Strukturierung auf das auszubildende Faserverbundbauteil zu übertragen. Zusätzlich ist es möglich, die Oberfläche des Faserverbundbauteils zu vergüten. Beispielsweise kann eine Lackierung des Bauteils innerhalb des Werkzeugs vorgenommen (sogenanntes In-Mould-Coating) werden.

Nachdem im Rahmen der Erfindung als niedrig-viskoses Matrixmaterial Polyurethan (PUR) verwendet wird, genügen relativ niedrige Drücke bei der Herstellung des Faserverbundbauteils. Der relativ geringe Verarbeitungsdruck führt bei hoher Oberflächen- und Konturgenauigkeit zu einer spannungs- und verzugsfreien Bauteilgeometrie. Ferner ist durch die eingebrachte Oberflächenstruktur kein weiterer Oberflächenschutz nötig, so dass das derart ausgeformte Bauteil bereits fertiggestellt ist. Die in einer bevorzugten Ausführungsform in das Werkzeug eingebrachte Beschichtung, insbesondere Lackierung, dient als zusätzliche Oberflächenvergütung, und wird zusammen mit der fein strukturierten Oberfläche auf das Faserverbundbauteils übertragen.

Mit dem erfindungsgemäßen Verfahren werden konventionelle Pressen mit hohen Schließkräften nicht mehr benötigt. Dies wiederum führt zu geringeren Investitionskosten.

"Fein strukturierte Oberfläche" bedeutet im Sinne der vorliegenden Erfindung eine Struktur mit einer optisch hohen Auflösung im Mikrometerbereich, bevorzugt eine sogenannte Narbtiefe im Bereich von 5-700µm, besonders bevorzugt 5-500µm, insbesondere 200-500µm.

Das in Ausführungsformen der vorliegenden Erfindung verwendete Polyurethan-Material weist eine Glasübergangstemperatur von bis zu 280°C auf, und erlaubt somit gegenüber anderen Matrixmaterialien, wie Epoxidharzen, weitere Möglichkeiten der Nachbearbeitung, die bei diesen nicht durchführbar wären. Rein beispielhaft sei eine KTL-Lackierung (kathodische Tauchlackierung) genannt, die ggf. alternativ oder zusätzlich zum bereits genannten In-Mould-Coating zum Einsatz kommen kann.

Gemäß der vorliegenden Erfindung ist die fein strukturierte Oberfläche in Form eines Negativs einer Oberfläche aus dem Bereich der Bionik, rein beispielhaft einer Lotusoberfläche, einer Holz- oder Rindenstruktur, einer Fischhaut, beispielsweise einer Haihaut, oder eines tierischen Leders ausgebildet. Die positiven Eigenschaften der jeweiligen Oberfläche können somit auf das Faserverbundbauteil übertragen werden.

Ist die strukturierte Oberfläche beispielsweise in Form eines Negativs einer Fischhaut, insbesondere Haihaut, ausgebildet, hat dies den Vorteil, dass ein Bauteil mit einem geringen Strömungswiderstand geschaffen werden kann. Zwar war es im Stand der Technik bekannt, Fischhautoberflächen mittels Folien auf Bauteile eines Flugzeugs aufzubringen, um auf diese Weise den Strömungswiderstand des Flugzeugs zu reduzieren. Eine Folie kann sich jedoch witterungs- und/oder belastungsbedingt vom Faserverbundbauteil lösen. Die Oberflächenstruktur in Form eines Negativs einer Fischhaut, insbesondere Haihaut, ist im Rahmen der vorliegenden Erfindung jedoch Teil des Faserverbundbauteils selbst, und ist deshalb nicht den Nachteilen einer zusätzlich aufgebrachten Folie ausgesetzt.

Im Falle eines PKWs kann diese Spezialoberfläche in einem Abschnitt eines Faserverbundbauteils des Fahrzeugs oder im gesamten Außenhautbereich vorgesehen werden, beispielsweise am Kotflügel, Fahrzeugdach oder der Motorhaube. Ein derartiges Bauteil führt zur Reduzierung des CW-Werts und kann somit zur Senkung des Kraftstoffverbrauchs beitragen. Auch kann das Faserverbundbauteil mit fein strukturierter Oberfläche im Innenraumbereich von Fahrzeugen zur Anwendung kommen. Weitere Anwendungsgebiete betreffen wie eingangs bereits erwähnt Personentransportgefährten, insbesondere im Schienenverkehr oder im Bereich der Luftfahrt, oder auch Sportgeräte wie Surfbretter.

Eine strukturierte Oberfläche in Form eines Negativs einer Lotusoberfläche wiederum hat den Vorteil, dass Schmutzpartikel von der Oberfläche des Faserverbundbauteils abperlen. Bei einem PKW können somit die üblichen Reinigungsintervalle minimiert werden.

Andere strukturierte Oberflächen, wie eine Holz- oder Rindenstruktur oder ein tierisches Leder können hingegen aus optischen und/oder haptischen Gründen gewählt werden, um - falls das Faserverbundbauteil bspw. an einem PKW zur Anwendung kommt - die Wertigkeit des Fahrzeugs zu erhöhen. Diese Vorteile treffen im Übrigen auch auf die zuvor genannten Oberflächen (Fischhaut, Haihaut, Lotusoberfläche) zu.

Gemäß einer weiteren Ausführungsform ist der Reaktionsstart des Materials einstellbar, insbesondere durch Wahl der Temperatur während des Einbringens des Matrixmaterials in das Werkzeug. Somit kann der Reaktionsstart erfolgen, sobald das Matrixmaterial vollständig in das Werkzeug eingebracht ist. Auf diese Weise wird das vollständige Füllen des Werkzeugs bei gleichzeitig kurzer Taktzeit gewährleistet. Ferner kann eine niedrige Viskosität für einen wählbaren Zeitraum ab Vermischungsbeginn beibehalten werden kann. Unmittelbar nach Ablauf dieses Zeitraumes (vorzugsweise der Injektionszeit) verläuft die Reaktion des Materials dann schlagartig. Auf diese Weise reduziert sich aufgrund des Reaktionsverhaltens der erforderliche Fließwiderstand zum Füllen der Kavität des Werkzeuges signifikant. Demnach können vergleichsweise geringe Schließkräfte zum Zuhalten der Werkzeuge zum Einsatz kommen. Damit lassen sich wie beim PUR-Schäumen wirtschaftliche Großserienverfahren darstellen.

Ferner kann das Einbringen des Matrixmaterials druckgesteuert ablaufen, wobei der Druck kleiner 15bar, insbesondere kleiner 10 bar, gehalten wird. Derart geringe Drücke führen bei hoher Oberflächen- und Konturgenauigkeit gleichzeitig zu einer spannungs- und verzugsfreien Bauteilgeometrie. Darüber hinaus können bei geringen Drücken auch einfach ausgeführten Werkzeughälften aus abschnittsweise Keramik, Aluminium oder Kunststoff verwendet werden.

Gemäß einer weiteren Ausführungsform wird das Matrixmaterial temperaturgesteuert in das Werkzeug eingebracht, bevorzugt mit einer Temperatur von 70-100°C, insbesondere 70-90°C. Sollte eine In-Mould-Coating zur zusätzlichen Vergütung des Faserverbundbauteils eingesetzt werden, so liegt dieser Temperaturbereich ausreichend unterhalb der relevanten Grenztemperatur. Allerdings sind die genannten Temperaturbereich auch ohne zusätzliche Vergütung des Faserverbundbauteils vorteilhaft.

Da der hier beschriebene Produktionsprozess im Wesentlichen isotherm verläuft, und üblicherweise die maximal auftretende Temperatur mit <100°C vergleichsweise gering ausfällt, kann das beschriebene Verfahren vorteilhaft mit einer Lackeinbringung in das Werkzeug kombiniert werden (sogenanntes In-Mold-Coating (IMC)). Durch das Einbringen des Lacks in das Werkzeug vor dem Fertigungsprozess kann vermieden werden, dass die relativ fein strukturierte Oberfläche der Bauteile durch einen späteren Lackiervorgang "zugeschlämmt" wird.

Beim erfindungsgemäßen Verfahren besteht zumindest die Werkzeughälfte mit der fein strukturierten Oberfläche zumindest abschnittsweise aus Keramik. Die Verwendung eines solchen Werkzeuges hat den Vorteil, dass sich die fein strukturierte Oberfläche relativ kostengünstig in diese einbringen lässt. Insbesondere in Kombination mit der Verwendung eines niedrig-viskosen Matrixmaterials, und hierdurch relativ geringen Innendrücken, ist die Lebensdauer der Werkzeughälfte aus zumindest abschnittsweise Keramik, Aluminium und/oder Kunststoff vergleichsweise hoch. Ein teilweise aus Keramik ausgebildetes Werkzeug kann die fein strukturierte Oberfläche besonders exakt und konturgetreu bei gleichzeitig wirtschaftlicher Realisierung eingebracht werden. Auch zeichnet sich ein solches Werkzeug durch seine Vakuumfähigkeit aus, und eignet sich deshalb besonders vorteilhaft für den genannten Einsatz. Bevorzugt wird der keramische Abschnitt der Werkzeughälfte, der die fein strukturierte Oberfläche aufweist, von einer insbesondere metallischen Aufspannplatte gehalten.

Bei den beschriebenen Verfahren kann das Polyurethanmaterial entweder bei offenem Werkzeug oder geschlossenen Werkzeug durchgeführt werden. Ferner wird ein Faserverbundbauteil aus Faserverbundmaterial beschrieben, insbesondere Fahrzeug(außen)verkleidungsbauteil, weiter bevorzugt eine Motorhaube, Kotflügel oder Fahrzeugdach, umfassend ein Fasermaterial sowie ein Matrixmaterial aus Polyurethan, wobei das Fahrzeugverkleidungsbauteil eine fein strukturierte Oberfläche aufweist, insbesondere eine Oberfläche aus dem Bereich der Bionik, weiter bevorzugt eine Lotusoberfläche, eine Holz- oder Rindenstruktur, eine Fischhaut, insbesondere eine Haihaut, oder ein tierischen Leder.

Das Faserverbundbauteil wird insbesondere mit einem zuvor genannten Verfahren hergestellt, und kann mit zuvor genannten Einzelmerkmalen kombiniert werden.

### Bevorzugte Ausführungsform der vorliegenden Erfindung

Nachfolgend wird eine bevorzugte Ausführungsform der vorliegenden Erfindung anschaulich beschrieben. Weitere in diesem Zusammenhang genannte Modifikationen können jeweils miteinander kombiniert werden, um neue Ausführungsformen auszubilden.

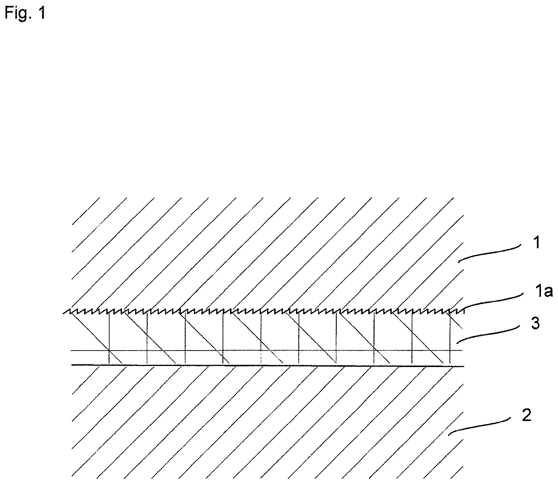

- Fig.1: ist eine schematische Schnittansicht eines Abschnitts eines Werkzeugs mit einer ersten und zweiten Werkzeughälfte

Zur Durchführung des nachfolgend beschriebenen Verfahrens zum Herstellen eines Faserverbundbauteils wird ein Werkzeug verwendet, das eine erste 1 und eine zweite 2 Werkzeughälfte umfasst. Mindestens eine der beiden Werkzeughälften 1, 2 kann zumindest abschnittsweise mit einer fein strukturierten Oberfläche 1a versehen sein, die bei Herstellung der Werkzeughälfte in diese eingebracht wird. Im vorliegenden Ausführungsbeispiel ist die fein strukturierte Oberfläche 1a an der ersten Werkzeughälfte 1 vorgesehen.

Handelt es sich bei der fein strukturierten Oberfläche 1a um ein Negativ einer Oberfläche aus dem Bereich der Bionik, so wird diese über ein bekanntes Abformverfahren abgeformt und auf eine Oberfläche eines Werkzeugs übertragen, um die fein strukturierte Oberfläche auszubilden.

Das auf diese Weise erhaltene Werkzeug kann nachfolgend bei einem Verfahren zum Herstellen eines Faserverbundbauteils eingesetzt werden.

In einem ersten Verfahrensschritt wird eine Beschichtung, insbesondere eine Lackierung, auf die Werkzeughälfte 1 aufgebracht, welche die fein strukturierte Oberfläche 1a aufweist. Dieses Verfahren wird als In-Mould-Coating bezeichnet. Anschließend wird ein Faserrohling in das Werkzeug eingelegt, und die Werkzeughälften 1, 2 des Werkzeugs werden unter Ausbildung eines Hohlraums 3, in dem der Faserrohling aufgenommen ist, geschlossen.

Nachdem die Werkzeughälften 1, 2 geschlossen wurden, kann über einen Mischkopf das Matrixmaterial in den Hohlraum 3 eingeführt werden. Das Matrixmaterial wird im Bereich des Mischkopfes vorbereitet und anschließend in den Hohlraum 3 eingespritzt wird. Hierbei durchtränkt das Matrixmaterial den im Hohlraum 3 befindlichen Faserrohling.

Als Matrixmaterial wird ein Werkstoff aus der Polyurethanfamilie oder ein anderes Polymer verwendet, welcher während der Einbringung in den Hohlraum 3 des Werkzeugs eine niedrige Viskosität aufweist. Diese Eigenschaft des Matrixmaterials ermöglicht es, das Einführen in das Werkzeug bei relativ niedrigem Druck zu vollziehen, beispielsweise bis ca. 15 bar. Dies hat den Vorteil, dass geringere Rückhaltekräfte am Werkzeug bereitgestellt werden müssen.

Die Aktivierung des Matrixmaterials verläuft temperaturgesteuert, und kann im konkreten Fall bei einer Temperatur von ca. 70-90°C nach einer bestimmten Zeit ausgelöst werden. Diese Temperatur liegt ausreichend unterhalb der Grenztemperatur für die In-Mould-Coating (ca. 120°C). Anschließend härtet das Matrixmaterial nach Abschluss des Füllvorgangs, der sich u.a. nach der Größe des Bauteils richtet, relativ zügig aus.

Durch Anwendung der In-Mould-Coating bleibt die durch die Werkzeughälfte vorgegebene fein strukturierte Oberfläche am Faserverbundbauteil erhalten, und es kann ein Bauteil hergestellt werden, das die vorteilhaften Eigenschaften eines Faserverbundbauteils mit denjenigen Eigenschaften verknüpft, die durch die feine Strukturierung der Oberfläche in dieses eingebracht werden.

Die Anwendungsgebiete eines derartigen Faserverbundbauteils sind vielfältig. Rein beispielhaft könnte auf diese Weise ein Fahrzeugdach oder eine Motorhaube eines PKWs hergestellt werden, die mit einer Oberfläche aus dem Bereich der Bionik versehen ist. Gleiches betrifft andere Komponenten bei Transportfahrzeugen sowohl im Innen- als auch im Außenbereich.

## Patentansprüche

1. Verfahren zum Herstellen eines Faserverbundbauteils, insbesondere eines Fahrzeugverkleidungsbauteils, bevorzugt Fahrzeugaußenverkleidungsbauteils, in einem Werkzeug, das eine erste (1) und eine zweite (2) Werkzeughälfte aufweist, wobei zumindest eine der Werkzeughälften zumindest abschnittsweise eine fein strukturierte Oberfläche (1a) aufweist, welche fein strukturierte Oberfläche (1a) in Form eines Negativs einer Oberfläche aus dem Bereich der Bionik ausgebildet ist und eine Tiefe von 5-700µm aufweist, mit den Schritten:
- Einlegen eines Faserrohlings in das Werkzeug,
- Einbringen eines niedrig viskosen Matrixmaterials, nämlich Polyurethan, in das Werkzeug zum Ausbilden einer Matrix des Faserverbundbauteils, wobei die Viskosität des Matrixmaterials bei 80°C etwa 1000mPas oder weniger beträgt, und
- Entnehmen des Faserverbundbauteils aus dem Werkzeug. wobei zumindest die Werkzeughälfte (1) mit der fein strukturierten Oberfläche (1a) zumindest abschnittsweise aus Keramik besteht.

2. Verfahren gemäß Anspruch 1, das ferner den folgenden Schritt umfasst:
- Einbringen einer Beschichtung, insbesondere einer Lackierung, auf eine der Werkzeughälften des Werkzeugs, welche Werkzeughälfte (1) zumindest abschnittsweise die fein strukturierte Oberfläche (1a) aufweist.

3. Verfahren gemäß Anspruch 1 oder 2, bei dem die fein strukturierte Oberfläche (1a) in Form eines Negativs einer Oberfläche einer Lotusoberfläche, einer Holz- oder Rindenstruktur, einer Fischhaut, einer Haihaut oder eines tierischen Leders ausgebildet ist.

4. Verfahren gemäß Anspruch 1 oder 2, bei dem ein Reaktionsstart des Matrixmaterials einstellbar ist, insbesondere durch Auswahl der Temperatur während des Einbringens des Matrixmaterials.

5. Verfahren gemäß einem der vorangegangenen Ansprüche, bei dem das Einbringen des Matrixmaterials druckgesteuert abläuft, wobei der Druck kleiner 15 bar, insbesondere kleiner 10 bar, gehalten wird.

6. Verfahren gemäß einem der vorangegangenen Ansprüche, bei dem das Matrixmaterial temperaturgesteuert in das Werkzeug eingebracht wird, bevorzugt mit einer Temperatur von 70-100°C, insbesondere 70-90°C.

7. Verfahren gemäß einem der vorangegangenen Ansprüche, bei dem die Viskosität des Matrixmaterials bei 80°C 750mPas oder weniger, bevorzugt 500mPas oder weniger beträgt.

8. Verfahren gemäß einem der vorangegangenen Ansprüche, bei dem der Faserrohling Glasfaser, Carbonfaser, Aramidfaser, Naturfaser und/oder Basaltfaser aufweist.

9. Verfahren gemäß einem der vorangegangenen Ansprüche, bei dem die fein strukturierte Oberfläche eine Tiefe von 5-500µm, weiter bevorzugt 200-500µm aufweist.

## Claims

1. Method for manufacturing a fibre composite component, in particular a vehicle panelling component, preferably vehicle external cladding component, in a tool which has a first (1) and a second (2) tool half, wherein at least one of the tool halves has in at least one section a finely structured surface (1a), which finely structured surface (1a) is in the form of a negative of a surface from the field of bionics and has a depth of 5-700 µm, having the steps of:
- laying a fibre blank in the tool,
- introducing a low-viscosity matrix material, namely polyurethane, into the tool to form a matrix of the fibre composite component, wherein the viscosity of the matrix material at 80°C is approximately 1000 mPas or less, and
- removing the fibre composite component from the tool,
wherein at least the tool half (1) with the finely structured surface (1a) is in at least one section made of ceramic.

2. Method according to claim 1, which further comprises the following steps:
- introducing a coating, in particular a lacquer, to one of the tool halves of the tool, which tool half (1) in at least one section exhibits the finely structured surface (1a).

3. Method according to claim 1 or 2, in which the finely structured surface (1a) is in the form of a negative of a lotus surface, a wood or bark structure, a fish skin, a shark skin or an animal leather.

4. Method according to claim 1 or 2, in which the start of the reaction of the matrix material is adjustable, in particular by selecting the temperature during introduction of the matrix material.

5. Method according to any of the preceding claims, in which the introduction of the matrix material proceeds under pressure control, wherein the pressure is kept below 15 bars, in particular below 10 bars.

6. Method according to any of the preceding claims, in which the matrix material is introduced into the tool under temperature control, preferably at a temperature of 70-100°C, in particular 70-90°C.

7. Method according to any of the preceding claims, in which the viscosity of the matrix material at 80°C is 750 mPas or less, preferably 500 mPas or less.

8. Method according to any of the preceding claims, in which the fibre blank has glass fibre, carbon fibre, aramid fibre, natural fibre and/or basalt fibre.

9. Method according to any of the preceding claims, in which the finely structured surface has a depth of 5-500 µm, further preferably 200-500 µm.

## Revendications

1. Procédé de fabrication d'une pièce en matériau composite renforcé par des fibres, en particulier une pièce d'habillage de véhicule, de préférence une pièce d'habillage extérieur de véhicule, dans un outil qui comporte une première moitié d'outil (1) et une seconde moitié d'outil (2), dans lequel au moins l'une des moitiés d'outil présente au moins par endroits une surface finement structurée (1a), laquelle surface finement structurée (1a) est réalisée sous la forme d'un négatif d'une surface issue du domaine de la bionique et présente une profondeur de 5 à 700 µm,
avec les étapes suivantes :
- pose d'une ébauche en fibres dans l'outil,
- introduction d'un matériau de matrice faiblement visqueux, à savoir du polyuréthane, dans l'outil afin de réaliser une matrice de la pièce en un matériau composite renforcé par des fibres, la viscosité du matériau de matrice à 80 °C étant égale à 1000 mPas ou moins, et
- retrait de la pièce en matériau composite renforcé par des fibres de l'outil,
au moins la moitié d'outil (1) de surface finement structurée (1a) étant constituée de céramique au moins par endroits.

2. Procédé selon la revendication 1, qui comprend en outre l'étape suivante :
- introduction d'un revêtement, en particulier d'un vernis, sur l'une des moitiés de l'outil, laquelle moitié d'outil (1) présente au moins par endroits la surface finement structurée (1a).

3. Procédé selon la revendication 1 ou 2, dans lequel la surface finement structurée (1a) est conçue sous la forme d'un négatif d'une surface de lotus, d'une structure de bois ou d'écorce, d'une peau de poisson, d'une peau de requin ou d'un cuir animal.

4. Procédé selon la revendication 1 ou 2, dans lequel un début de réaction du matériau de matrice peut être réglé, en particulier en choisissant la température pendant l'introduction du matériau de matrice.

5. Procédé selon l'une des revendications précédentes, dans lequel l'introduction du matériau de matrice se déroule sous pression contrôlée, la pression étant maintenue inférieure à 15 bars, en particulier inférieure à 10 bars.

6. Procédé selon l'une des revendications précédentes, dans lequel le matériau de matrice est introduit dans l'outil sous température contrôlée, de préférence avec une température de 70 à 100 °C, en particulier de 70 à 90 °C.

7. Procédé selon l'une des revendications précédentes, dans lequel la viscosité du matériau de matrice à 80 °C est égale à 750 mPas ou moins, de préférence à 500 mPas ou moins.

8. Procédé selon l'une des revendications précédentes, dans lequel l'ébauche en fibres comporte des fibres de verre, des fibres de carbone, des fibres d'aramide, des fibres naturelles et/ou des fibres de basalte.

9. Procédé selon l'une des revendications précédentes, dans lequel la surface finement structurée présente une profondeur de 5 à 500 µm, de préférence de 200 à 500 µm.
